# EUROPÄISCHE PATENTANMELDUNG

(11) **EP 1 197 313 A1**
(43) Veröffentlichungstag der Anmeldung: **17.04.2002**
(21) Anmeldenummer: 01123911.8
(22) Anmeldetag: 06.10.2001
(51) Int. Cl.: B29C 45/17

(54) **Vorrichtung und Verfahren zur Sicherstellung der Parallelität zweier Werkzeugaufspannplatten**

(30) Priorität: 12.10.2000 DE 10050458
(71) Anmelder: Battenfeld GmbH, D-58540 Meinerzhagen (DE)
(72) Erfinder: Vedder, Ulrich, Dipl.-Ing., 51766 Engelskirchen (DE)

(57) **Zusammenfassung**

Die Erfindung betrifft eine Vorrichtung zum Sicherstellen der Parallelität zweier Werkzeugaufspannplatten, insbesondere bei einer Spritzgießmaschine, die aufweist: eine erste Werkzeugaufspannplatte, die eine Hälfte eines Werkzeugs trägt und drehbar gelagert ist, eine zweite Werkzeugaufspannplatte, die die andere Hälfte eines Werkzeugs trägt und fest mit dem Maschinenrahmen verbunden ist, und eine Lagerung für die erste Werkzeugaufspannplatte, die die Achsparallelität der ersten Werkzeugaufspannplatte zur zweiten Werkzeugaufspannplatte gewährleistet. Erfindungsgemäß ist dabei vorgesehen, daß die Lagerung (5) der ersten Werkzeugaufspannplatte (2) mit mindestens einem Krafterzeugungselement (8), vorzugsweise einer Druckdose ausgestattet ist.

Das erfindungsgemäße Verfahren zur Sicherstellung der Achsparallelität zweier Werkzeugaufspannplatten, insbesondere bei einer Spritzgießmaschine, wobei eine erste drehbare Werkzeugaufspannplatte (2) durch Holme (4) geführt auf eine zweite feste Werkzeugaufspannplatte (3) zubewegt wird, zeichnet sich dadurch aus, daß vor oder während des Bewegens der ersten Werkzeugaufspannplatte (2) durch Aktivieren von mindestens einem Krafterzeugungselement (8) das Spiel in der Lagerung (5) der ersten Werkzeugaufspannplatte (2) ausgeglichen wird und der systembedingte Kippwinkel (α) vorzugsweise 0° ist.

## Beschreibung

Die Erfindung betrifft eine Vorrichtung zum Sicherstellen der Parallelität zweier Werkzeugaufspannplatten, insbesondere bei einer Spritzgießmaschine, die aufweist:
- eine erste Werkzeugaufspannplatte, die eine Hälfte eines Werkzeugs trägt und drehbar gelagert ist,
- eine zweite Werkzeugaufspannplatte, die die andere Hälfte eines Werkzeugs trägt und fest mit dem Maschinenrahmen verbunden ist, und
- eine Lagerung für die erste Werkzeugaufspannplatte, die die Achsparallelität der ersten Werkzeugaufspannplatte zur zweiten Werkzeugaufspannplatte gewährleistet.

Werkzeugaufnahmevorrichtungen dieser Art sind allgemein bekannt. Vorteilhaft werden sie insbesondere bei Spritzgießmaschinen eingesetzt, bei denen eine feste und eine relativ zu ihr verschiebliche Werkzeugaufspannplatte vorgesehen ist. Bei diesem Maschinentyp wird insbesondere eine Bauform eingesetzt, bei der die feste und die verschiebliche Werkzeugaufspannplatte über vier Holme verbunden sind, in der Schließposition die Holme mit der verschieblichen oder festen Platte verriegelt werden und über vier Druckdosen, die im Holmbereich angeordnet sind, die Schließkraft aufgebracht wird.

Um ein exaktes, planparalleles Schließen und Zuhalten des Werkzeugs auch bei großer Werkzeugschließkraft zu gewährleisten, sind vielfältige Ansätze gemacht worden. Beispielsweise können die Werkzeugaufspannplatten und deren Lagerung so dick und massiv ausgeführt werden, daß die schließkraftbedingten Verformungen untergeordnet sind, was jedoch dann auf Kosten des Maschinengewichts und -preises geht. Aber auch dann kann das systembedingte Spiel zwischen der Lagerung der Werkzeugaufspannplatte und der ersten Werkzeugaufspannplatte nicht ausgeschlossen werden. Dies hat zur Folge, daß die erste Werkzeugaufspannplatte leicht kippt und dadurch die Achsen der beiden Werkzeughälften nicht mehr parallel zu einander angeordnet sind. Beim Schließen der beiden Werkzeughälften kann dies zu Beschädigungen des Werkzeuges führen.

Der Erfindung liegt daher die Aufgabe zugrunde, eine Lagerung der genannten Gattung zu schaffen, die die genannten Nachteile vermeidet. Die Vorrichtung soll also auf einfache und preiswerte Weise bei der möglichst modularen Verwendung bestehender Maschinenelemente sicherstellen, daß sich die Werkzeugaufspannplatten auf einer Achse zueinander bewegen. Weiterhin soll es möglich sein, die erste Werkzeugaufspannplatte um ihre eigene Achse zu drehen, ohne diese Parallelität der Achsen zu verlieren.

Die Lösung der Aufgabe durch die Erfindung ist dadurch gekennzeichnet, daß die Lagerung (5) der ersten Werkzeugaufspannplatte (2) mit mindestens einem Krafterzeugungselement (8), vorzugsweise einer Druckdose ausgestattet ist. Durch diese Ausgestaltung der Lagerung ist sichergestellt, daß die drehbare Werkzeugaufspannplatte (2) vor dem Verfahren in Richtung zur festen Werkzeugaufspannplatte (3) aus ihrer systembedingten Kippstellung um den Kippwinkel (α) in eine achsparallele Lage zur zweiten Werkzeugaufspannplatte (3) aufgerichtet wird.

Vorteilhafterweise werden mehrere Krafterzeugungselemente (8) eingesetzt, wobei diese dann gegenüberliegend angeordnet sind. Werden beispielsweise zwei Druckdosen eingesetzt, sind diese um 180° versetzt, werden vier Druckdosen eingesetzt, sind diese jeweils um 90° versetzt in der Lagerung angeordnet.

Weiterbildungsgemäß ist vorgesehen, daß die Lagerung innenliegend angeordnet ist, dies hat den Vorteil, daß bei gleicher Wirkungsweise keine vorstehenden Teile in den Verfahrraum der Werkzeugplatten hineinragen und weiterhin der Verschmutzungsgrad der Lagerung minimiert wird, was wiederum die Standzeit erhöht.

Das lösungsgemäße Verfahren zur Sicherstellung der Achsparallelität zweier Werkzeugaufspannplatten, insbesondere bei einer Spritzgießmaschine, wobei eine erste drehbare Werkzeugaufspannplatte (2) durch Holme (4) geführt auf eine zweite feste Werkzeugaufspannplatte (3) zubewegt wird, zeichnet sich dadurch aus, daß vor oder während des Bewegens der ersten Werkzeugaufspannplatte (2) durch Aktivieren von mindestens einem Krafterzeugungselement (8) das Spiel in der Lagerung (5) der ersten Werkzeugaufspannplatte (2) ausgeglichen wird und der systembedingte Kippwinkel (α) vorzugsweise 0° ist.

Die vorgeschlagene Lösung gewährleistet somit das parallele aufeinander Zufahren zweier Werkzeugaufspannplatten und bietet somit den größtmöglichen Schutz gegen eine Beschädigung der Werkzeughälften.

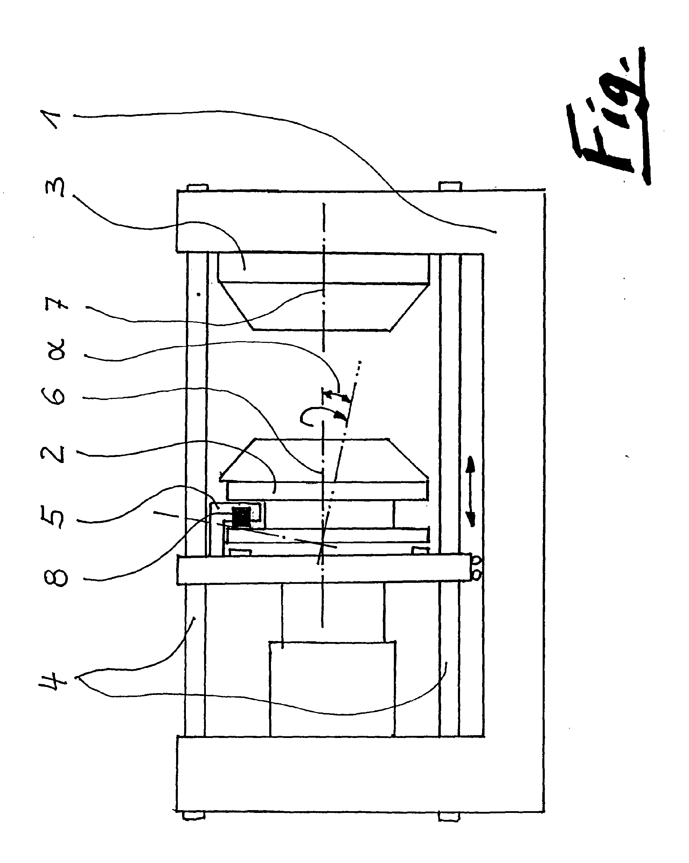

In der Zeichnung ist schematisch ein Teil einer Spritzgießmaschine zu sehen. Im C-förmigen Rahmen 1 sind Holme 4 angeordnet, wobei eine erste Werkzeugaufspannplatte 2 mit einer ersten Werkzeughälfte drehbar gelagert und auf den Holmen 4 verschieblich ist. Auf einer Seite des Rahmens 1 ist eine zweite Werkzeugaufspannplatte mit einer zweiten Werkzeughälfte fest mit diesem verbunden. Naturgemäß würde die erste Werkzeugaufspannplatte 2 mit der ersten Werkzeughälfte um den Kippwinkel α aus der Parallelität zu den Achsen 6 und 7 kippen, da in der Lagerung 5 immer ein minimales Spiel vorhanden ist, um das Verdrehen der ersten Werkzeugaufspannplatte 1 zu gewährleisten.

Da aber genau dies nicht gewünscht ist, wird das systembedingte Spiel durch in der Lagerung 5 angeordnete Krafterzeugungselemente 8 - in diesem Beispiel sind Druckdosen eingesetzt - eliminiert. Die gekippte erste Werkzeugaufspannplatte 1 wird durch Aktivieren der Druckdosen aufgerichtet. Dies wird durch einen Hub der Druckdosen gegen einen Anschlag gewährleistet. Es ist aber auch denkbar, durch einen vorher bestimmten Hub der Druckdose das Aufrichten um den gewünschten Winkel sicherzustellen, da dieser über die Maschinensteuerung geregelt bzw. gesteuert werden kann.

### Bezugszeichenliste:

- 1: Maschinenrahmen
- 2: erste (drehbare) Werkzeugaufspannplatte
- 3: zweite (feststehende) Werkzeugaufspannplatte
- 4: Holme
- 5: Lagerung der ersten Werkzeugaufspannplatte (2)
- 6: Verfahrachse der ersten Werkzeugaufspannplatte (2)
- 7: Verfahrachse der zweiten Werkzeugaufspannplatte (3)
- 8: Krafterzeugungselement

- α: Kippwinkel der ersten Werkzeugaufspannplatte (2)

## Patentansprüche

1. Vorrichtung zum Sicherstellen der Parallelität zweier Werkzeugaufspannplatten (2, 3), insbesondere bei einer Spritzgießmaschine, die aufweist:
- eine erste Werkzeugaufspannplatte (2), die eine Hälfte eines Werkzeugs trägt und drehbar gelagert ist,
- eine zweite Werkzeugaufspannplatte (3), die die andere Hälfte eines Werkzeugs trägt und fest mit dem Maschinenrahmen (1) verbunden ist, und
- eine Lagerung (5) für die erste Werkzeugaufspannplatte (2), die die Achsparallelität der ersten Werkzeugaufspannplatte (2) zur zweiten Werkzeugaufspannplatte (3) gewährleistet,
**dadurch gekennzeichnet,**
**daß** die Lagerung (5) der ersten Werkzeugaufspannplatte (2) mit mindestens einem Krafterzeugungselement (8), vorzugsweise einer Druckdose ausgestattet ist.

2. Vorrichtung nach Anspruch 1, **dadurch gekennzeichnet, daß** zwei Krafterzeugungselemente (8) in der Lagerung (5) angeordnet sind, wobei diese um 180° versetzt sind.

3. Vorrichtung nach Anspruch 1, **dadurch gekennzeichnet, daß** vier Krafterzeugungselemente (8) in der Lagerung (5) angeordnet sind, wobei diese um 90° versetzt sind.

4. Vorrichtung nach Anspruch 1 bis 3, **dadurch gekennzeichnet, daß** die Lagerung (5) innenliegend angeordnet ist.

5. Verfahren zur Sicherstellung der Achsparallelität zweier Werkzeugaufspannplatten, insbesondere bei einer Spritzgießmaschine, wobei eine erste drehbare Werkzeugaufspannplatte (2) durch Holme (4) geführt auf eine zweite feste Werkzeugaufspannplatte (3) zubewegt wird,
**dadurch gekennzeichnet**
**daß** vor oder während des Bewegens der ersten Werkzeugaufspannplatte (2) durch Aktivieren von mindestens einem Krafterzeugungselement (8) das Spiel in der Lagerung (5) der ersten Werkzeugaufspannplatte (2) ausgeglichen wird und der systembedingte Kippwinkel (α) vorzugsweise 0° ist.
